# EUROPÄISCHE PATENTSCHRIFT

(11) **EP 2 555 554 B1**
(45) Veröffentlichungstag und Bekanntmachung des Hinweises auf die Patenterteilung: **10.10.2018**
(21) Anmeldenummer: 11006357.5
(22) Anmeldetag: 02.08.2011
(51) Int. Cl.: H04W 24/08, H04W 36/14

(54) **GERÄT SOWIE VERFAHREN ZUR DETEKTION VON VERSORGUNGSLÜCKEN IN EINEM NETZWERK**
DEVICE AND METHOD FOR DETECTING SUPPLY SHORTFALLS IN A NETWORK
APPAREIL ET PROCÉDÉ DE DÉTECTION DE MANQUES D'ENTRETIEN DANS UN RÉSEAU

(43) Veröffentlichungstag der Anmeldung: 06.02.2013
(73) Patentinhaber: Telefónica Germany GmbH & Co. OHG, 80992 München (DE)
(72) Erfinder: Müllner, Robert, 81479 München (DE); Neef, Wolfgang, 82194 Gröbenzell (DE)
(74) Vertreter: Herrmann, Uwe

(56) Entgegenhaltungen:
- EP-A2- 0 431 956
- WO-A1-2010/051838
- US-A1- 2006 183 487
- US-A1- 2011 130 135

## Beschreibung

Die vorliegende Erfindung betrifft ein Gerät zur Detektion von permanenten und/oder temporären Versorgungslücken in einem Netzwerk, sowie ein ähnliches Endgerät und ein Verfahren. In Mobilfunknetzen erfolgt bekannterweise die Kommunikation zwischen einem mobilen Endgerät und einer Basisstation (BS) über eine Luftschnittstelle. Aufgrund geographischer und baulicher Gegebenheiten treten jedoch sogenannte Versorgungslücken auf, die oftmals im Rahmen der Netzplanung nicht erkennbar sind und eine gewünschte flächendeckende Versorgung eines geographischen Gebietes verhindern. Diese Versorgungslücken können permanent oder temporär auftreten und führen dazu, dass ein Mobilfunk-Teilnehmer innerhalb dieser Versorgungslücke durch den zugrundeliegenden Mobilfunkstandard nicht bedient werden kann. Im günstigsten Fall erfolgt dabei ein Wechsel auf eine andere Mobilfunktechnologie, die an der entsprechenden Stelle keine Versorgungslücke aufweist. Sowohl der Wechsel selbst, als auch die Fortführung der Verbindung in dieser zweiten, nicht-favorisierten Netztechnologie sind jedoch in der Regel mit Qualitätseinbußen verbunden.

Es ist bereits bekannt, Netzplanungstools zu verwenden, welche digitale Karten einlesen und die Dämpfung des Sendesignals durch die Beschaffenheit der Gebäude sowie der Flächen zwischen der Basisstation und dem mobilen Endgerät berechnen. Dabei handelt es sich um statische Tools, über welche die Positionen von Basisstationen geplant werden, um minimale Versorgungslücken innerhalb des gewünschten Versorgungsgebietes zu erreichen. Aufgrund mangelnder Genauigkeit dieser Tools und Veränderungen innerhalb des Netzes sowie bauliche Veränderungen innerhalb des Versorgungsgebietes müssen auch während des Netzbetriebes Neuplanungen durchgeführt werden. Bei dieser Vorgehensweise werden durch die Planungstools Versorgungslücken identifiziert und nicht anhand reeller Daten aus dem Netzbetrieb.

Um die Mobilfunkversorgung eines geographischen Gebietes zu planen, werden weiterhin Modelle verwendet, für die zunächst das Link-Budget für beide Richtungen berechnet wird, d.h. in Uplink (UL), d.h. in Aufwärts-Richtung vom mobilen Endgerät zur Basisstation, und in Downlink (DL), d.h. Abwärts-Richtung von der Basisstation zum mobilen Endgerät. Das Link-Budget beinhaltet dabei die komplette Kette der für die Luftschnittstelle relevanten Komponenten und deren Dämpfungswerte.

Die Planung eines Mobilfunknetzes der zweiten Generation 2G, Global System for Mobile Communications (GSM), sowie der dritten Generation 3G, Universal Mobile Telecommunications System (UMTS) und Long Term Evolution (LTE) wird wie folgt für den 2G-Fall beschrieben und in entsprechender Weise für 3G- und LTE-Netze durchgeführt.

Die Basisstation stellt eine bestimmte maximale Sendeleistung zur Verfügung und das mobile Endgerät benötigt eine gewisse minimale Empfangsleistung, um die mobile Versorgung zu ermöglichen. Zwischen der sendenden und der empfangenden Station erfolgt eine Dämpfung der Signalstärke. Signalschwächende Komponenten sind in DL-Richtung die Dämpfung auf dem Kabel zwischen Basisstation und sendender Antenne, der Combiner-Verlust, der Pfad-Verlust über die Luftschnittstelle der Indoor-Penetration-Loss bei Verwendung des mobilen Endgerätes innerhalb eines Gebäudes, bzw. Incar-Loss bei der Verwendung des mobilen Endgerätes in einem Automobil, sowie der Body-Loss durch die Verwendung eines elektromagnetische Wellen dämpfenden Materials, wie beispielsweise einer Tasche, die das mobile Endgerät umhüllt. Eine rechnerische Verstärkung des Signals erfolgt durch den Antennengewinn, aufgrund der Abstrahlung der elektromagnetischen Wellen in einer bestimmten Richtung, anstatt der Verwendung eines Rundstrahlers. Um Schwankungen aufgrund von Fading-Effekten zu berücksichtigen, wird ein Fading-Margin eingeführt.

In analoger Weise wird das Link-Budget für die UL-Richtung berechnet, wobei anstelle des Combiner-Verlustes ein Duplexer-Verlust zu berücksichtigen ist und ein zusätzlicher Polarisationsgewinn durch die Verwendung von zwei oder mehreren Antennen im Link-Budget zu berücksichtigen ist. Aus beiden Budgets wird die limitierende Richtung für die weitere Planung zugrunde gelegt, wobei für diese der aus dem Link-Budget resultierende maximale Pfadverlust entscheidend ist. Die Anzahl der Basisstationen und deren geographischen Lagen werden so berechnet und geplant, dass für jeden Bereich innerhalb des zu versorgenden Gebietes der maximale Pfadverlust inkl. Fading-Margin mit einer bestimmten Wahrscheinlichkeit nicht überschritten wird.

Ein Überschreiten des Pfadverlustes kennzeichnet im Tool eine Versorgungslücke. Typische Planungsziele für die Indoor-Versorgung in städtischen Gebieten liegen bei 95% des geographischen Versorgungsgebiets, für das der maximale Pfadverlust nicht überschritten werden darf, d.h. deren Pegel die minimal geforderte Empfangsleistung gemäß den für das Link-Budget und für die Wellenausbreitung getroffenen Annahmen bereitstellt. Für ländliche Gebiete oder aufgrund von wirtschaftlichen Erwägungen werden teilweise niedrigere Wahrscheinlichkeiten akzeptiert.

Zur Berechnung des Pfadverlustes über die Luftschnittstelle werden die sog. Ausbreitungsmodelle verwendet, z.B. Okomura Hata, Walfisch Ikegami oder COST-231.

In reellen Mobilfunknetzten treten aber häufig Abweichungen gegenüber den über Planungstools bereitgestellten Versorgungsangaben auf, d.h. es existieren Versorgungslücken, die anhand der Planung weder vorhergesagt, noch während des Betriebs ausreichend detektiert werden können. Die Versorgungslücken, d.h. das Vorherrschen einer zu geringen Empfangsstärke bzw. -qualität am Ort des mobilen Endgeräts, können aufgrund ungenügender Kenntnis der tatsächlichen Signaldämpfung gemäß der Mehrwegeausbreitung des Signals über die Luftschnittstelle, sowie aufgrund lokaler Unterschiede der im Planungstool festgelegten Parameter innerhalb des als minimale Einheit definierten geographischen Bereiches (Auflösung des Tools), nicht erkannt werden.

In der Tat weichen in reellen Netzen auftretende Pfadverluste oftmals von den aus Planungstools ermittelten Daten ab. Ungenauigkeiten bei der Signaldämpfung auf der Luftschnittstelle liegen meist in der ungenügenden Information über die tatsächlich auftretende Dämpfung. Durch Fading-Margins von z.B. 12,5 dB wird versucht, die tatsächlichen Schwankungen zu berücksichtigen.

Signale erreichen über Mehrwegeausbreitung den Empfänger und überlagern sich dort in konstruktiver bzw. destruktiver Weise. Dabei kommt es sowohl zu örtlichen, als auch zu zeitlichen Fluktuationen des Signalpegels und es werden bestimmte Annahmen für die Dämpfung getroffen, z.B. 20 dB Signalverlust für zwei zu durchdringende Mauern (Indoor-Penetration-Loss). Dämpfungswerte werden dabei typischerweise als konstant innerhalb der Auflösung des Tools (z.B. 50 m x 50 m) angenommen, variieren aber stark aufgrund der Materialeigenschaften, z.B. unterschiedlich starker Absorption elektromagnetischer Wellen durch unterschiedliches Mauerwerk, oder aufgrund von mehr oder weniger starker Reflexion von Wellen, beispielsweise durch metallbedampfte Fensterscheiben in einem Haus, während das benachbarte Haus innerhalb desselben Auflösungsbereiches deutlich niedrigere Dämpfungswerte aufweist.

Neuere Planungstools verfügen über genauere Dämpfungsparameter mit einer verbesserten örtlichen Auflösung. Dennoch sind diese Tools nicht in der Lage, Versorgungslücken ausreichend zu detektieren, denn hier spielen das Teilnehmerverhalten sowie die örtlichen und zeitlichen Fluktuationen eine massive Rolle. Pegelbasierte Versorgungslücken werden dadurch detektiert, dass eine Versorgungsmatrix für das gesamte zu planende Gebiet erstellt wird und geographische Gebiete, für die der erforderliche Mindestsignalpegel (Coverage) nicht gegeben ist, erkannt werden.

Qualitätsbedingte Probleme werden lokalisiert, indem ergänzend zu der Coverage-Planung ein Frequenzplan generiert wird und Interferenzen, also gegenseitige Störungen verschiedener Basisstationen im Downlink-Signal bzw. Störungen mobiler Endgeräte in Uplink-Richtung berechnet werden. Unterschreitet das Verhältnis zwischen Sendesignal zu Störsignal (Carrier-to-Interference Ratio, C/I bzw. Signal over Interference plus Noise Ratio, SINR) einen bestimmten Schwellwert, so wird die Qualität des Empfangssignals an dieser Stelle als nicht akzeptabel gekennzeichnet.

Des Weiteren können die Versorgungslücken aufgrund unzureichender Kenntnis der tatsächlichen Werte des Link-Budgets und Schwankungen der für das Link-Budget getroffenen Annahmen anhand unterschiedlicher Charakteristika der mobilen Endgeräte sowie der Dämpfungswerte für die Netzkomponenten, wie Combiner, Kabel etc, nicht hinreichend erkannt werden.

Die im Link-Budget zugrunde liegenden Werte variieren und führen damit zu Ungenauigkeiten in der Prädiktion von Empfangspegel und -qualität. Überschreiten diese Variationen die definierten Margen, so werden Versorgungslücken nicht dargestellt.

Die Empfängerempfindlichkeiten verschiedener mobiler Endgeräte weisen Unterschiede von bis zu 8 dB auf. Auch der Antennengewinn variiert von Terminal zu Terminal. Dies sind additive Bestandteile des Link-Budgets, die in den Planungstools verwendet werden.

Nach der Netzplanungsphase sind die im Netz noch vorherrschenden Versorgungslücken nur mit hohem Aufwand zu detektieren. Messfahrten liefern Hinweise über Empfangsleistung und -qualität im Outdoor-Bereich, geben aber keine ausreichenden Informationen über die im Indoor-Bereich vorherrschenden Empfangsbedingungen. Hierfür werden Modelle verwendet, die bestimmte Dämpfungen für Gebäude annehmen, die tatsächlichen Verhältnisse weichen aber oftmals stark von den vorhergesagten Werten ab und hängen vom Teilnehmerverhalten ab. Messfahrten sind zudem teuer und zeitaufwendig. Zielführende Hinweise beruhen meist auf Teilnehmer-Erfahrungen.

Ein automatisiertes Verfahren zum Erkennen von existierenden Versorgungslücken basierend auf der Auswertung von Leistungszählern, sogenannten Performance-Countern zeigt, dass dieses Verfahren für die Detektion von Versorgungslücken nicht ausreichend ist.

Als Versorgungslücken wurden mehrere im Netz bekannte Stellen in innerstädtischen Gebieten ausgewählt, an denen Teilnehmer im stationären Betrieb die 3G-Coverage temporär verlieren und durch die 2G-Technologie , die an diesen Stellen keine Versorgungslücken aufwies, versorgt werden. Durch Netzplanungstools wurden an diesen Stellen fälschlicherweise keine Versorgungslücken angezeigt. In diesen Fällen erfolgt im stationären Fall eine Einbuchung in das 2G-Netz, obwohl sich der Teilnehmer in einem 3G-versorgten Gebiet befindet. Auch ein Rückfall von 3G- auf 2G-Versogung nach erfolgreichem Aufbau der Verbindung im 3G-Netz und stationärer Anwendung wurde identifiziert sowie ein darauffolgender Wechsel zurück in das 3G-Netz.

Um bekannte Versorgungslücken innerhalb des 3G-Netzes über Performance-Counter zu ermitteln, wurden bisher folgende Schritte analysiert:
Im ersten Schritt wurde die Anzahl der Zellwechsel von einer Technologie zu einer anderen Netztechnologie ausgewertet. Dieser Inter-Radio Access Technology (inter-RAT) Handover Attempt ist das Ergebnis einer unzureichenden Versorgung innerhalb einer ersten Netztechnologie (3G) und eine ausreichende Versorgung durch eine zweite Netztechnologie (2G).

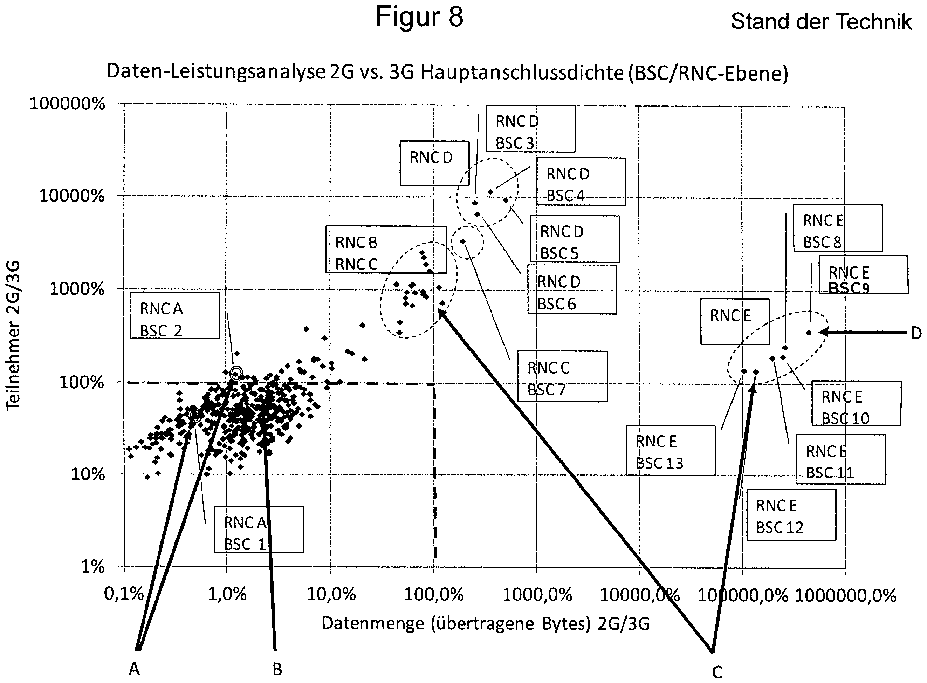

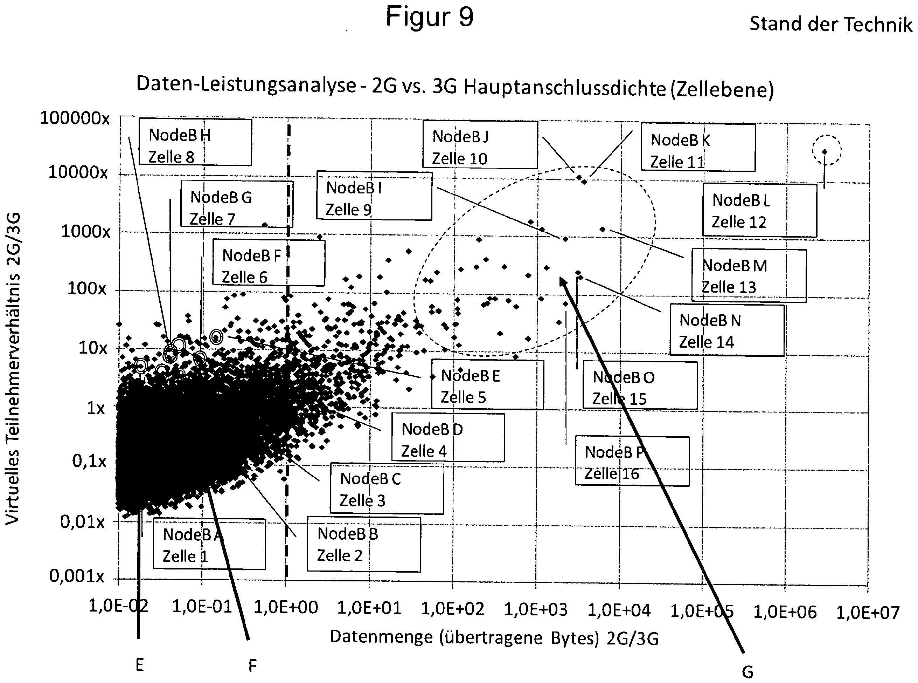

Im nächsten Schritt wurde das Verhältnis der übertragenen Datenmenge der in der 2G Base Station Controller Area (BSC-Area) befindlichen Basisstationen und der in der geographisch vergleichbaren 3G Radio Network Controller Area (RNC-Area) befindlichen NodeBs (UMTS Basisstationen) gebildet. Ebenso wurde das Verhältnis der Anzahl der Teilnehmer innerhalb des 2G-Gebietes und des entsprechenden 3G-Gebietes berechnet. Die Ergebnisse auf BSC bzw. RNC Level sind in Figur 8 gezeigt und die Verhältnisse auf Zellebene sind in Figur 9 dargestellt.

In Figur 8 wird mit (C) gezeigt, dass über eine Performance-Counter-Auswertung erkannte potentielle Versorgungslücken mit bekannten Versorgungslücken nicht übereinstimmen. (D) zeigt die Bedeutung eines Punkts in der Grafik, der für ein bestimmtes Netzelement die Verhältnisse der übertragenen Datenmenge und Anzahl an Teilnehmern zwischen der 2G- und 3G-Netztechnologie repräsentiert. Die mit (C) und (D) gekennzeichneten Bereiche zeigen potentielle Versorgungslücken gemäß Performance-Counter Analysen (Stand der Technik). Tatsächliche Versorungslücken treten aber in den mit (A) gekennzeichneten Bereichen auf. Diese unterscheiden sich nicht von den als unauffällig geltenden Bereichen (B). In Figur 8 werden mit (A) die Bereiche von bekannten Versorungslücken (eingekreist) und mit (B) die Bereiche von nicht bekannten Versorgungslücken (nicht eingekreist) gezeigt. Diese weisen ähnliche Verhältnisse der übertragenen 2G- und 3G-Datenmenge sowie ähnliche Verhältnisse der Teilnehmerzahlen auf.

Mit Performance-Counter Analysen gemäß des Standes der Technik lassen sich die durch (A) gekennzeichneten Bereiche nicht erkennen. Deshalb ist die Performance-Counter Analyse nicht hinreichend und eine schwellwertgesteuerte Analyse der in den Ansprüchen, insbesondere in den Ansprüchen 5 - 7 beschriebenen Eingangsgrößen ist erforderlich, um Versorgungslücken im Mobilfunk zu detektieren.

In Figur 9 zeigt (G) Zellen, in welchen potentielle Versorgungslücken durch eine Performance-Counter Analyse erkannt werden könnten, aber nicht vorhanden waren. Die mit (G) gekennzeichneten Bereiche zeigen potentielle Versorgungslücken gemäß Performance-Counter-Analyse. Tatsächliche Versorgungslücken treten aber in den mit (E) gekennzeichnten Bereichen auf, d. h. (E) zeigt die Bereiche mit bekannten Versorungslücken (eingekreist); (F) zeigt keine bekannte Versorgungslücken, d.h. es handelt sich um unauffällige Bereiche. Die Bereiche (E) unterscheiden sich nicht von den als unauffällig geltenden Bereichen (F).

Mit dieser Analyse wurden die Auswirkungen von Versorgungslücken innerhalb eines Versorgungsgebietes untersucht. Existiert innerhalb eines Gebietes eine Versorgungslücke im 3G-Netz, so wird der Verkehr - sofern möglich - im 2G-Netz, das an dieser Position keine Versorgungslücke aufweist, abgeführt. Folglich sollten im Falle von 3G-Versorgungslücken das Verhältnis des 2G/3G Datenvolumens sowie das Verhältnis der 2G/3G-Teilnehmerzahlen einen hohen Wert anzeigen. Die Zellen mit bekannten Versorgungslücken konnten damit aber nicht von anderen Zellen separiert werden. Zudem stimmen die anhand der Auswertung von Performance-Countern prognostizierten Zellen mit potentiellen Versorgungslücken nicht mit Zellen bekannter Versorgungslücken überein. Letztere können anhand ihres Verhältnisses des übertragenen Datenvolumens der 2G- zu 3G-Technologie sowie der Anzahl der Teilnehmer in der jeweiligen Technologie von Zellen, für die keine Versorgungslücken bekannt sind, nicht getrennt werden, wie in den Figuren 8 und 9 gezeigt ist.

Im dritten Schritt wurden weitere Performance-Counter für 3G- und 2G-Zellen ausgewertet. Keine dieser Maßnahmen bietet jedoch eine ausreichende Möglichkeit, Versorgungslücken hinreichend gut zu detektieren.

US2006/0183487 A1 und EP 0 431 956 A2 ermöglichen die Entdeckung von Versorgungslücken mittels Messungen. Aufgabe der vorliegenden Erfindung ist es daher ein Gerät zu schaffen sowie ein Verfahren bereitzustellen, durch welches, unabhängig vom Mobilfunkstandard die oben genannten Probleme überwunden werden können und Versorgungslücken in den zu versorgenden Gebieten auf einer einfachen Weise erkannt und geschlossen werden können, ohne dass Einbußen in der Verbindungsqualität entstehen.

Diese Aufgabe wird erfindungsgemäß durch ein Gerät, ein mobiles multi-technologiefähiges Endgerät und ein Verfahren gemäß den Ansprüchen gelöst. Die bisher durchgeführten Analysen haben gezeigt, dass weder Netzplanungstools, noch die anschließende Auswertung von Performance-Countern in der Lage waren, die Versorgungslücken hinreichend genau zu detektieren. Aufgrund der oben erwähnten Ungenauigkeiten von Planungstools und der Abweichungen im reellen Netz sowie den unzureichenden Informationen aus Performance-Countern wird erfindungsgemäß eine Auswertung von Echtzeit-Daten aus dem Netzwerk durchgeführt, so dass aus einer Verknüpfung von Messparametern und Schwellwerten, Versorgungslücken sicher detektiert werden können.
Das erfindungsgemäße Gerät weist vorzugsweise eine Hardware-Einheit auf, welche eine Eingabe-/Ausgabe-Einheit zur Aufnahme und Ausgabe der erfassten Echtzeit-Daten, einen Prozessor zur Verarbeitung der Echtzeit-Daten sowie eine Speicher-Einheit zur Speicherung und Wiederabrufung der Daten enthält. Die vorgenannten Schritte, insbesondere die Ausgabe und/oder die Verarbeitung der Daten, können, müssen jedoch nicht in Echtzeit erfolgen.

Vorzugsweise werden die mittels der Eingabe-/Ausgabe-Einheit als Echtzeit-Daten erfassten Signalpegel und Signalqualität dem Prozessor zur Verarbeitung übergeben, wobei in der Speicher-Einheit des Kommunikationsgerätes die Schwellwerte von Signalpegel und Signalqualität, welche eine Versorgungslücke kennzeichnen, gespeichert werden. Die Schwellwerte werden dann dem Prozessor hinzugefügt, so dass eine ständige Auswertung der erfassten Echtzeit-Daten durchgeführt werden kann.

Eine besonders bevorzugte Ausführungsform sieht vor, dass weitere Daten, wie Laufzeitverzögerung, Zeitsteuerungsvorlauf und/oder geographische Informationen für die Auswertung der Daten im Prozessor verwendbar sind, um Versorgungslücken, die im inneren Bereich eines von dem Netz abgedeckten Versorgungsgebietes auftreten, von am Zellrand entstandenen Versorgungslücken zu unterscheiden.

Vorzugsweise wird das erfindungsgemäße Gerät in einem mobilen multiRAT fähigen Endgerät eingebaut, beispielsweise in einem 2G/3G-, 2G/3G/LTE-, 2G/LTE oder 3G/LTE-fähigen Endgerät.

Das 3G Mobilfunknetz, speziell die Netzelemente RNC und NodeB sollen in die Lage versetzt werden, das mobile Endgerät im CELL_DCH Status aufzufordern, periodisch oder ereignisgesteuert Messprotokolle an das Netz zu senden und dieses über einen aktuellen Empfangspegel und eine aktuelle Empfangsqualität eines von einer Sende-/Empfänger-Einheit des Endgerätes empfangenen Echtzeit-Signals zu informieren, um Informationen über Empfangsbedingungen am momentanen Aufenthaltsort des mobilen Endgerätes im Verbindungsmodus bereitzustellen.

Das erfindungsgemäße Verfahren zur Detektion von permanenten und/oder temporären Versorgungslücken in einem Netzwerk, insbesondere in einem Mobilfunknetz, weist folgende Verfahrensschritte auf: Empfangen eines Signals mittels einer Sende-/Empfänger-Einheit eines Kommunikationsgerätes; Auswertung des Signalpegels (z.B. Received Signal Code Power, RSCP für 3G und/oder RxLEV für 2G und/oder RSRP und/oder RSSI für LTE), der Signalqualität (z.B. Received Energy per Chip divided by the Power Density in the Band, Ec/No und/oder CQI für 3G; RxQUAL und/oder C/I und/oder FER für 2G und/oder SINR und/oder CQI und/oder RSRQ für LTE und/oder BER und/oder BLER und/oder Modulation und Coding Scheme Verwendung für 2G und/oder 3G und/oder LTE) sowie eine Laufzeitverzögerung des Signals in einem im Gerät vorgesehenen Prozessor; sowie Übermittlung der ausgewerteten Signaldaten an das Mobilfunknetz, wobei die Signaldaten, welche als Echtzeit-Daten aus dem Netz empfangen werden, kontinuierlich ausgewertet werden.

Bei dem Signalpegel kann es sich beispielsweuse um RxLEV für 2G; RSCP für 3G; RSRP und/oder RSSI für LTE handeln und/oder bei der Signalqualität um RxQUAL und/oder C/I und/oder BLER und/oder FER und/oder BER und/oder Codec Mode Verwendung und/oder Modulation und Coding Scheme Verwendung für 2G; Ec/No und/oder BLER und/oder CQI und/oder Modulation und Coding Scheme Verwendung für 3G; SINR und/oder BLER und/oder CQI und/oder RSRQ und/oder Modulation und Coding Scheme Verwendung für LTE.

Eine weitere Ausführungsform sieht vor, Echtzeit-Daten anderer im Netz befindlicher mobiler Endgeräte vorzugsweise über die Ein/Ausgabe-Einheit einzulesen, vorzugsweise in dem Prozessor zu verarbeiten und vorzugsweise über einen Vergleich mit den in der Speichereinheit enthaltenen Schwellwerten Versorgungslücken zu detektieren und diese vorzugsweise über die Ein/Ausgabe-Einheit an eine Anzeige-Einheit auszugeben.

Echtzeit-Daten anderer mobiler Endgeräte werden von den mobilen Endgeräten in DL-Richtung und den Basisstationen in UL-Richtung erfasst und dem Gerät zur Detektion von Versorgungslücken vorzugsweise über die Schnittstellen der Netzelemente des Mobilfunksystems zur Verfügung gestellt und über die Ein/AusgabeEinheit eingelesen.

Als besonders bevorzugt wird angesehen, dass für die Detektion von Versorgungslücken Informationen über den Signalpegel (z.B. RSCP) und die Signalqualität (z.B. Ec/No) aus den Funkressourcekontrollnachrichten (RRC-Messages) verwendet werden, die von dem mobilen Endgerät zu einer Basisstation (BS) des Mobilfunknetzes gesandt werden.

Vorzugsweise kann das Vorliegen einer Versorgungslücke innerhalb eines Beobachtungszeitraums anhand von detektierten Schwankungen des Signalpegels (z.B. RSCP) unter einen eingestellten Signalpegel-Schwellwert, sowie anhand von detektierten Schwankungen in der Signalqualität (z.B. Ec/No) unter einen eingestellten Signalqualitäts-Schwellwert in Verbindung mit geographischen Informationen detektiert werden.

Es ist besonders bevorzugt, dass zum Erkennen von Versorgungslücken, in denen ein Campieren des Endgerätes als nicht geeignet definiert wird, die Wahl der eingestellten Schwellwerte dient. Die Wahl der eingestellten Schwellwerte kann aber auch zum Erkennen von Versorgungsbereichen, in denen nach besser geeigneten Nachbarzellen bzw. Zellen anderer Netztechnologien gesucht wird, dienen. Dies betrifft vorzugsweise Zellen der LTE- und 3G-Netztechnologien.

Mit dem erfindungsgemäßen Verfahren kann aber nicht nur das Detektieren von Versorgungslücken realisiert werden, sondern auch nach Verlassen des Versorgungsbereiches einer ersten Mobilfunktechnologie und Campen in einer zweiten Mobilfunktechnologie nach Erfüllung der Einbuchkriterien für die erste Mobilfunktechnologie ein Wechsel zurück in diese erste Mobilfunktechnologie initiiert werden.

Durch die Erfindung kann das 3G-Mobilfunknetz in die Lage versetzt werden, zum Zwecke der Detektion von Versorgungslücken periodisch oder eventgetriggert die Signalqualität (z.B. Ec/No) und/oder den Signalpegel (z.B. RSCP) jedes mobilen Endgerätes, welches sich in der Reichweite einer Basisstation befindet, im Verbindungsmodus (Connected Mode) abzufragen und diese Daten von dem mobilen Endgerät an das Netz übermitteln zu lassen.

Denkbar ist es, wenn für die Detektion von Versorgungslücken ein Kommunikationsgerät bzw. das erfindungsgemäße Gerät verwendet wird, wie z. B. ein Test-Mobile, das in problematische Gebiete gebracht wird und dort Signalpegel, Signalqualität und geographische Informationen auswertet.

Vorzugsweise ist vorgesehen, dass das Mobilfunknetz in die Lage versetzt wird, vorzugsweise alle sich im Versorgungsgebiet dieser Technologie befindlichen mobilen Endgeräte dazu aufzufordern, periodisch oder ereignisgetriggert im aktiven Modus, oder speziell für 3G im CELL_DCH Modus, Informationen über die Funkbedingungen (Empfangspegel und Empfangsqualität) an das Netz zu senden. Damit wird die Informationsquelle über zu detektierende Versorgungslücken von Test-Mobiles auf vorzugsweise alle sich im Netz befindlichen mobilen Endgeräte erweitert.

Denkbar ist es, dass nach Verlassen der Versorgungslücke des Netzes einer bestimmten Netztechnologie und nach Erfüllung von Einbuchkriterien für das Netz dieser Netztechnologie, ein Wechsel zurück in das Netz dieser Netztechnologie angestoßen wird, wobei dieses Rückfall-Ereignis für eine Unterscheidung zwischen permanenten und temporären Versorgungslücken ausgewertet wird. Dadurch lassen sich Ping-Pong Effekte, z.B. LTE -> 2G -> LTE Zellwechsel oder 3G -> 2G -> 3G Zellwechsel detektieren.

Die vorliegende Erfindung wird nun anhand eines Ausführungsbeispiels und der Zeichnung näher erläutert. Es zeigen:
- Figur 1:: eine schematische Darstellung eines Gerätes zur Detektion von Versorgungslücken in einem Netzwerk gemäß einem Ausführungsbeispiel,
- Figur 2:: ein vereinfachtes Ablaufdiagramm zur Definition von Versorgungslücken im 3G inaktiven Modus nach der vorliegenden Erfindung,
- Figur 3:: ein Diagramm der Schwankungen des Signalpegels und der Signalqualität im 3G-Netz innerhalb eines Beobachtungszeitraumes,
- Figur 4:: ein Diagramm der Schwankungen des Signalpegels und der Signalqualität im 3G-Netz auf der linken Seite und des BCCH-Empfangspegels eines GSM-Signals auf der rechten Seite,
- Figur 5:: eine Zellen-Neuauswahl von einem 3G-Netz zu einem 2G-Netz (Wechsel in eine besser geeignete Zelle),
- Figur 6:: ein Diagramm des zeitlichen Verlaufs des 2G BCCH Empfangspegels auf der linken Seite und des 3G-Signalpegels und der 3G-Signalqualität auf der rechten Seite,
- Figur 7:: eine schematische Darstellung eines Cell Breathing Effekts in UL- und in DL-Richtung eines Mobilfunknetzes,
- Figur 8:: ein Diagramm der Verhältnisse der Anzahl der Teilnehmer und übertragener Datenmengen zwischen einem 2G-Gebiet und dem entsprechenden 3G-Gebiet auf BSC bzw. RNC Level nach dem Stand der Technik, und
- Figur 9:: ein Diagramm der Verhältnisse der Anzahl der Teilnehmer und übertragener Datenmengen zwischen einem 2G-Gebiet und dem entsprechenden 3G-Gebiet auf Zellebene nach dem Stand der Technik.

Das erfindungsgemäße Gerät kann beispielsweise (a) ein passives (Auswerte-)Gerät sein, das Messdaten aus den Netzelementen über die Ein/AusgabeEinheit (14) einliest, sie im Prozessor (16) verarbeitet und mit den in der SpeicherEinheit (18) abgelegten Schwellwerten vergleicht, um Versorgungslücken zu detektieren. In dieser Ausprägung führt das Gerät keine eigenständigen Messungen von Empfangspegel, -qualität und geographischen Daten durch, sondern analysiert die über die Netzelemente und mobilen Endgeräte ermittelten Messwerte.

Bei dem erfindungsgemäßen Gerät kann es sich beispielsweise auch um ein (b) (Kommunikations-)Gerät handeln, das sich im Netz wie ein mobiles Endgerät verhält und zudem Messungen zur Detektion von Versorgungslücken autonom durchführt und auswertet.

Eine bevorzugte Ausgestaltung liegt in einem Auswertegerät gemäß Ausführung (a). Weitere denkbare Ausprägungen der Erfindung sind die Verwendung des Algorithmus in einem Test-Mobile gemäß Ausführung (b) sowie die Anwendung des Algorithmus für SON, realisiert über Variante (a) oder (b).

Es ist denkbar, dass das Gerät ein eigenständiges Kommunikationsgerät ist, das als modifiziertes Handy in der Lage ist, die Messungen durchzuführen und die Ergebnisse, d.h. detektierte Versorgungslücken anzuzeigen oder auszugeben (Punkt b).

Vorzugsweise ist jedoch vorgesehen, dass die im Mobilfunksystem bestehenden Kommunikationseinheiten (mobiles Endgerät und Basisstation bzw. RNC/BSC) der Hardware-Einheit (12) die Messdaten (Signalpegel, Signalqualität und geographische Informationen) über dessen Eingabe/Ausgabe-Einheit (14) zur Verfügung stellen und die Hardware-Einheit (12) nur zur Auswertung der Daten sowie zur Detektion von Versorgungslücken verwendet wird, wohingegen keine eigenen Messungen über eine Antenne durch die Hardware-Einheit ausgeführt werden.

Das erfindungsgemäße Gerät bzw. Kommunikationsgerät kann aktive Messungen durchführen.

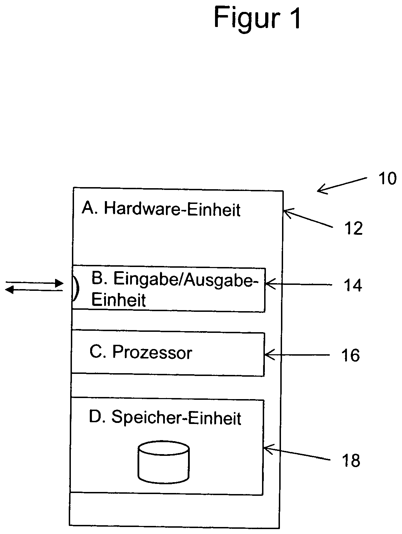

Der Hauptanwendungsfall (passives Gerät, das zur Auswertung der Daten und Detektion von Versorgungslücken verwendet wird) besteht darin, dass nur die Informationen über die zu detektierten Versorgungslücken an das Mobilfunknetz übertragen werden oder an ein Anzeigegerät (über die Eingabe/Ausgabe-Einheit (14) oder über eine neu zu beschreibende Komponente "Anzeige-Einheit" (20) der in Figur 1 beschriebenen Hardware-Einheit (12).

Bevor auf das erfindungsgemäße Gerät und das erfindungsgemäße Verfahren näher eingegangen wird, wird im Folgenden die Versorgungslücke genauer definiert.

Aufgrund der unterschiedlichen Beugung elektromagnetischer Wellen in Anhängigkeit der Trägerfrequenz fallen bei gleicher Sendeleistung, wie oben erwähnt, die geographischen Versorgungsbereiche für die Verwendung höherer Frequenzen kleiner aus als die für niedrigere Frequenzen. Konzentrische Zellen werden in GSM-Systemen typischerweise so geplant, dass die 900-MHz-Technologie eine Umbrellazelle darstellt und die 1800-MHz Technologie dazu verwendet wird, um Gebiete mit einem hohen Verkehrsaufkommen, die sog. Hot-Spots, innerhalb dieser Umbrellazelle, zu versorgen.

GSM-Zellen besitzen typischerweise eine größere Abdeckung als UMTS-Zellen, die Frequenzen im Bereich von 2 GHz verwenden. Für Mobilfunksysteme des Long Term Evolution (LTE) Standards wurden unterschiedliche Frequenzbänder freigegeben, wobei die niederfrequenten 800 MHz-Bänder aufgrund ihrer Ausbreitungsbedingungen in erster Linie für Makro-Zellen eingesetzt werden, die auch Indoor-Versorgung bieten, während Frequenzen aus dem 2600 MHz-Bereich bevorzugt für Pico-Zellen verwendet werden, die Outdoor-Gebiete hohen Verkehrsaufkommens versorgen oder mittels Home-Basisstationen für die Versorgung im Indoor-Bereich dienen.

Figur 1 zeigt eine vereinfachte schematische Darstellung eines erfindungsgemäßen (Kommunikations-)geräts 10 mit einer Hardware-Einheit 12, welche eine Eingabe/Ausgabe-Einheit 14, einen Prozessor 16 und eine Speicher-Einheit 18 aufweist.

Das Gerät 10 kann Teil eines mobilen Endgeräts sein, wobei es durchaus möglich ist, dass dieses als ein separates Gerät ausgebildet ist.

Dies ist eine mögliche Ausprägung. Die wesentliche bevorzugte Idee besteht darin, dass das Gerät nicht selbst die Daten (Empfangspegel, -qualität und geographische Informationen) misst, sondern die in den Netzelementen RNC und NodeB (3G), eNodeB (LTE) sowie BSC/PCU und BTS ermittelten Messdaten sammelt und diese auswertet. Das in dieser Erfindung beschriebene Gerät nimmt die Daten über die Ein/Ausgabe-Einheit (14) auf, identifiziert über den beschriebenen Algorithmus durch den Prozessor (16) unter Zuhilfenahme von in der Speicher-Einheit (18) abgelegte Schwellwerte die Versorgungslücken und gibt die erkannten Versorgungslücken über die Ein/Ausgabe-Einheit (14) an ein Anzeigeterminal zur Darstellung aus.

Für eine Ausgestaltung der Erfindung in selbstorganisierenden Netzen SON, die unten noch näher erläutert werden, kann in dieser Variante das Gerät physikalisch an einer beliebigen Stelle im Netz untergebracht sein und muss nicht zwingendermaßen am Ort vermuteter Versorgungslücken betrieben werden. Die Funktionalität des Gerätes könnte auch in die Hardware und Software bestehender Netzelemente integriert werden, d.h. das Gerät und das Netzelement greifen gemeinsam auf einen Prozessor und eine Speichereinheit zu. Als Messwerte, die dem Gerät über die Ein/Ausgabe-Einheit übertragen werden, dienen die Echtzeitdaten, die vor Ort von den mobilen Endgeräten in DL-Richtung und den Netzelementen in UL-Richtung aufgezeichnet werden.

Wesentlich ist die Anwendung des Algorithmus in dem Auswerte-Gerät. Die Verwendung des Algorithmus in einem Test-Mobile ist eine weitere Ausprägung, ebenso die Anwendung in SON.

Über die Eingabe/Ausgabe-Einheit 14 wird ein Signal empfangen, wobei der Signalpegel (z.B. RSCP), die Signalqualität (z.B. Ec/No) und das Propagation Delay im Prozessor 16 der Hardware-Einheit 12 kontinuierlich ausgewertet werden.

Befindet sich das mobile Endgerät im Idle Mode, so werden in UMTS/HSPA, im Falle eines Trace-Mobiles, Signalpegel und Signalqualität bereitgestellt. Die Signalqualität (Ec/No) wird dem Netz zudem im Falle eines Radio Resource Control (RRC) Setups mitgeteilt. Im Verbindungsmodus (Connected Mode) werden eventgetriggert Signalqualität (Ec/No) bzw. Signalpegel (RSCP) jedes mobilen Endgerätes an das Netz übermittelt.

Um Versorgungslücken innerhalb des Versorgungsgebietes von den am Zellrand existierenden Versorgungslücken zu unterscheiden, sollen über die in Figur 1 gezeigte Eingabe/Ausgabe-Einheit 14 im Prozessor 16 geographische Indikatoren verwendet und verarbeitet werden, d.h. ortsbezogene Informationen, z.B. über Triangulation von Signallaufzeiten (Global Positioning System, GPS, Galileo, Location Based Services, wie Enhanced Observed Time Difference (E-OTD), Time of Arrival (TOA)), Vergleich von Empfangspegelverhältnissen unterschiedlicher Basisstationen, Angel of Arrival oder zeitbezogene Informationen (Propagation Delay oder Timing Advance). Während Timing Advance Informationen in 2G-Netzen mit einer Granularität von ca. 550 m vorliegen, können in 3G-Netzen durch die Auswertung des Propagation Delays auf Chip-Basis feinere Granularitäten in der Größenordnung von 100 m erreicht werden. Daten werden dabei in der Speicher-Einheit 18 abgespeichert und können für die Ausgabe über die Eingabe/Ausgabe-Einheit 14 wieder abgerufen werden.

In UMTS/HSPA-Netzen werden Signalpegel und Signalqualität als Kriterien angewandt, um ein mobiles Endgerät auf einer 3G-Zelle campen zu lassen.

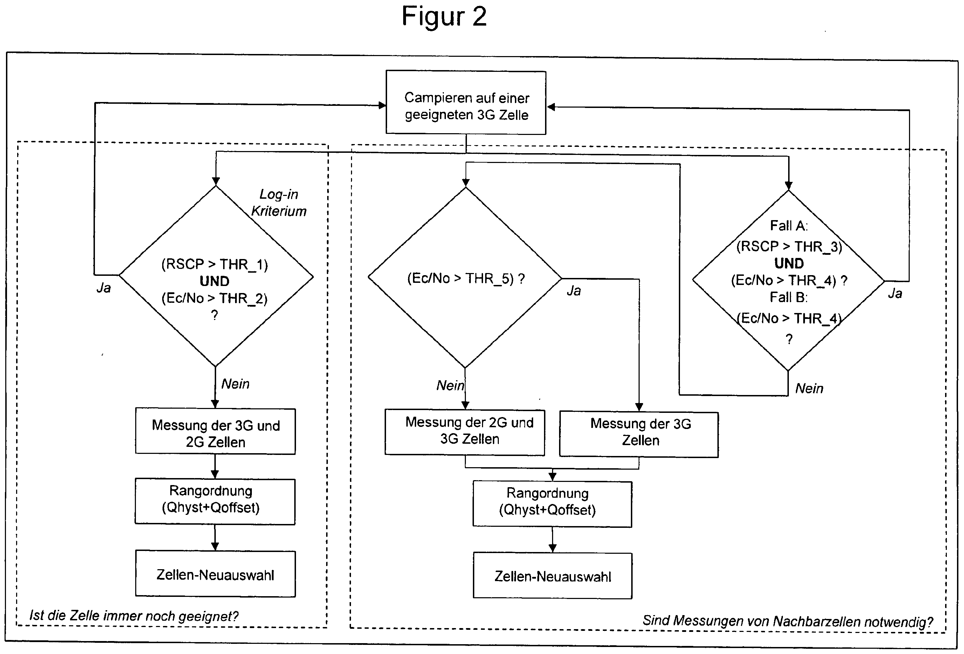

Figur 2 zeigt ein vereinfachtes Diagramm eines Ruhezustands, des sogenannten Idle Mode State. Dabei wird für den Signalpegel (RSCP) ein Schwellwert THR_1 und für die Signalqualität (Ec/No) ein Schwellwert THR_2 angesetzt. Liegen Signalpegel und Signalqualität oberhalb dieser Schwellwerte, kann ein mobiles Endgerät auf der 3G-Zelle campen. Ist diese Bedingung aber nicht erfüllt, gilt die Zelle als nicht geeignet, um darauf zu campen und es liegt eine Versorgungslücke vor.

Diese Werte werden kontinuierlich überwacht und es werden zusätzliche Kriterien verwendet, um bei Unterschreiten eines Schwellwertes (hier RSCP < THR_3 und Ec/No < THR_4) nach weiteren Zellen derselben Netztechnologie, bzw. im Falle von Ec/No < THR_5, nach Zellen einer anderen Netztechnologie zu suchen (z.B. GSM oder LTE).

Der in Figur 2 dargestellte Fall A zeigt die Kombination aus Signalpegel und Signalqualität und der Fall B zeigt die ausschließliche Verwendung des Qualitätskriteriums. Sind diese Kriterien nicht erfüllt, so kann ein Zellwechsel in eine andere Zelle derselben Technologie (3G) oder bei Erfüllung der Einbuchkriterien in eine andere Netztechnologie, ein Wechsel über eine Zellen-Neuauswahl (Cell-Reselection) initiiert werden. Dabei werden Ranking-Kriterien verwendet, um den Zellwechsel innerhalb derselben Technologie oder zu einer anderen zu priorisieren. Es ist zu bemerken, dass dieser Fall keine Versorgungslücke im eigentlichen Sinne repräsentiert, sondern eine Situation, in der durch einen Zellwechsel eine Verbesserung der Versorgungssituation erwartet wird. Da dies aber ein Verlassen der bisherigen Technologie (3G) bedeutet, wird diese Situation ebenso als Versorgungslücke definiert, um gemäß des erfindungsgemäßen Algorithmus identifiziert zu werden.

Figur 2 definiert Versorgungslücken im Idle Mode. Analoges gilt aber auch für den Connected Mode, wobei Handover-Parameter anstelle von Cell-Reselection Parametern verwendet werden. Die Versorgungs-Bedingungen ändern sich bei einem Übergang von Idle- zu Connected-Mode nicht.

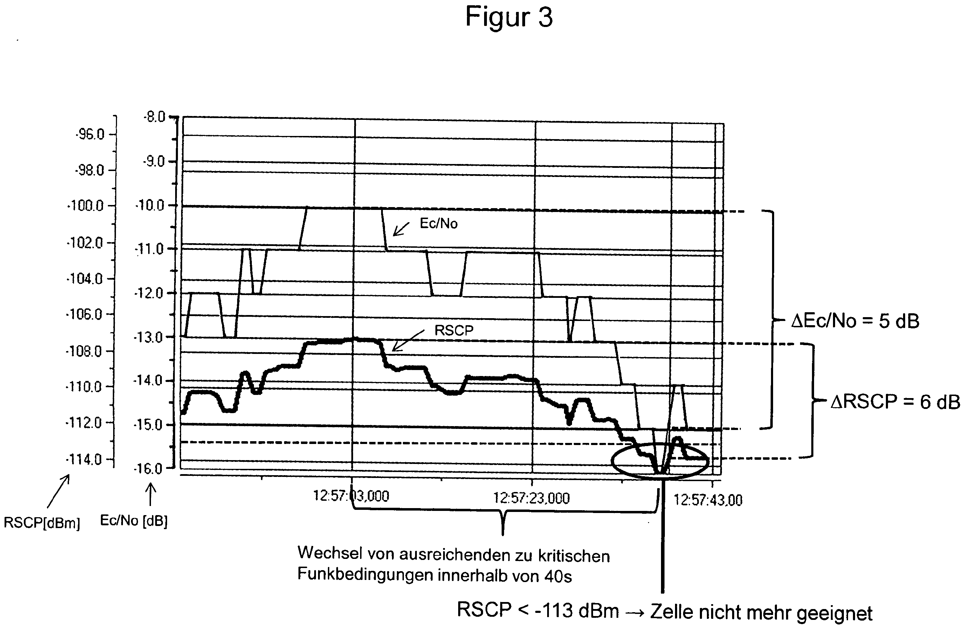

Figur 3 zeigt ein Diagramm der Schwankungen des Signalpegels (RSCP) und der Signalqualität (Ec/No) innerhalb eines Beobachtungszeitraumes. Hierbei wird die Änderung von ausreichenden auf kritische Funkbedingungen innerhalb von 40s graphisch dargestellt. Dabei treten Schwankungen von 6 dB (ΔRSCP = 6 dB) im Signalpegel und 5 dB (ΔEc/No = 5 dB) in der Signalqualität (Ec/No) auf.

Zum auf der Zeitachse angegebenen Zeitpunkt t = 12:57:35 (hh:mm:ss) fällt der Signalpegel (RSCP) unter den eingestellten RSCP-Schwellwert THR_1 = THR_3 = -113 dBm. Das mobile Endgerät sucht nun nach geeigneten Nachbarzellen und misst dazu den GSM-Empfangspegel.

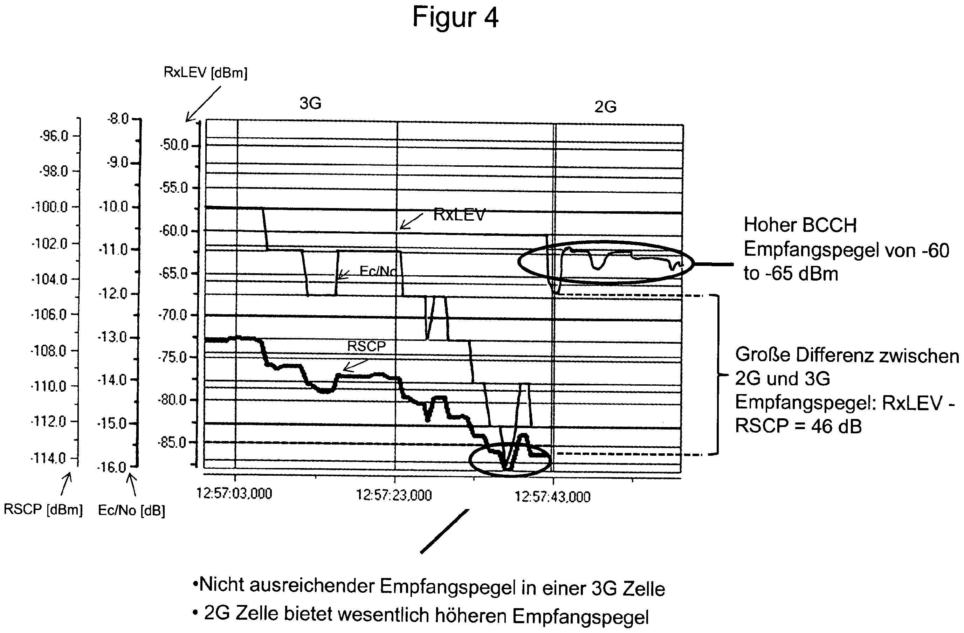

Figur 4 zeigt den Broadcast Control Channel (BCCH) Empfangspegel des GSM-Signals bei -60 dBm bis -65 dBm, der ausreichend hoch ist, um die Einwahlkriterien zu erfüllen. Wie aus dem Diagramm ersichtlich ist, besteht eine große Differenz zwischen dem 2G- und dem 3G-Emfangspegel (RxLEV - RSCP = 46 dB). Wenn eine nicht ausreichende Versorgung in einer 3G-Zelle detektiert wird, bietet eine 2G-Zelle, wie in der Figur dargestellt, einen wesentlich höheren Empfangspegel an.

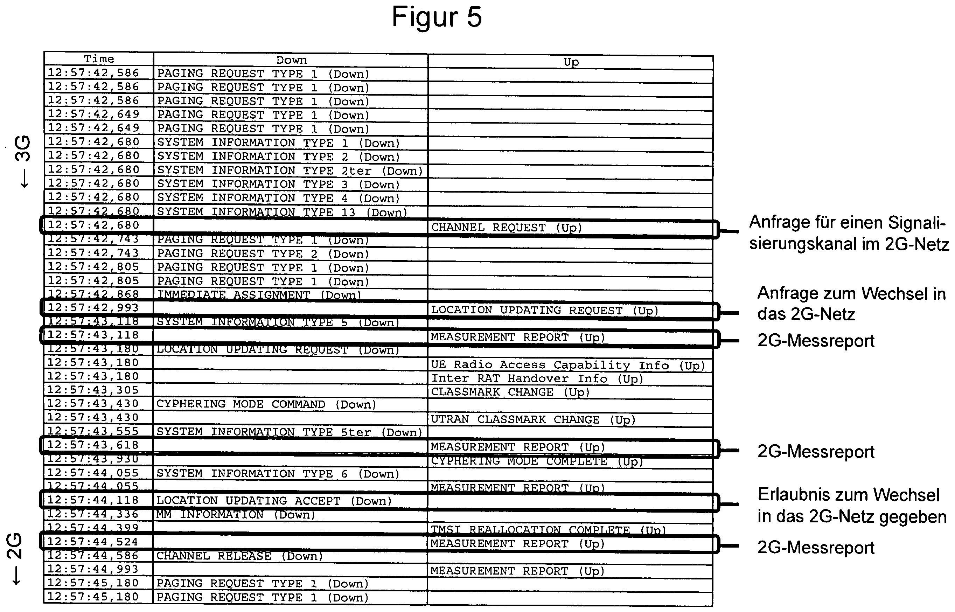

Daraufhin schickt ein 2G- und 3G-fähiges mobiles Endgerät (Dual-RAT Terminal), wie in Figur 5 gezeigt, eine Anfrage für einen Signalisierungskanal im 2G-Netz (Channel Request), eine Anfrage zum Wechsel in das 2G-Netz (Location Update Request) sowie anschließend einen 2G-Messreport (2G Measurement Report).

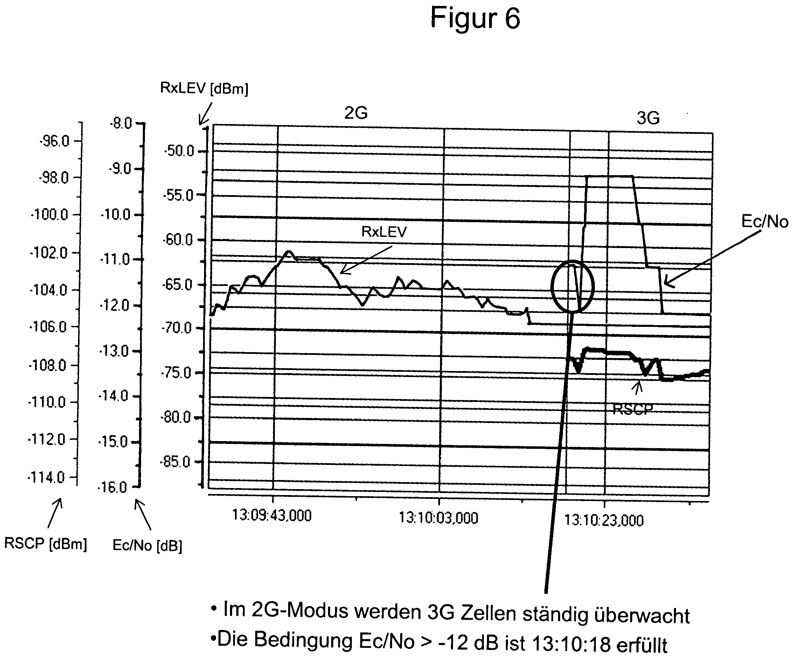

Der Wechsel aus dem 3G-Netz aufgrund einer Versorgungslücke in das 2G-Netz wurde ausgeführt und das mobile Endgerät befindet sich nun im 2G-Netz und führt dort neben den Messungen zur 2G-Versorgung auch Messungen des Signalpegels und der Signalqualität des 3G-Netzes durch, wie dies in Figur 6 gezeigt ist. Im 2G-Modus werden die 3G-Zellen ständig überwacht und wie in Figur 6 graphisch dargestellt ist, wird die Bedingung Ec/No > -12 dB um 13:10:18 erfüllt.

Sobald die 3G-Versorgungslücke verlassen wird und die Einbuchkriterien für das 3G-Netz gemäß Figur 2 erfüllt sind, kann der Wechsel zurück in das 3G-Netz getriggert werden.

Die hier beschriebene 3G-Versogungslücke tritt in Mobilfunknetzen nicht nur am Zellrand, sondern auch in schlecht versorgten Gebieten weit entfernt vom Zellrand auf.

Wie oben ausführlich dargelegt, soll eine Versorgungslücke als solche gekennzeichnet werden, falls die Kriterien Signalpegel (RSCP) oder Signalqualität (Ec/No) in Verbindung mit den geographischen Informationen bestimmte Schwellwerte unterschreiten, das heißt:
[(Signalpegel < Schwellwert S1) ODER (Signalqualität < Schwellwert S2)] UND (Signallaufzeit < Schwellwert S3).

Abhängig von der Wahl der Schwellwerte können die zwei, in Figur 2 gezeigten Anwendungsfälle, definiert werden, nämlich:
1) Erkennen von Versorgungslücken, in denen ein Campen des mobilen Endgerätes als nicht mehr geeignet definiert wurde (linke Seite der Figur 2); und
2) Erkennen von Versorgungbereichen, in denen nach besser geeigneten Nachbarzellen bzw. Zellen anderen Netztechnologien gesucht wird (rechte Seite der Figur 2).

Über die Art der zeitlichen Mittelung der Eingangsparameter Signalpegel, Signalqualität und Signallaufzeit kann festgelegt werden, wie schnell und wie häufig auf Unterschreitung der Schwellwerte reagiert wird, d.h. wie schnell eine Versorgungslücke als solche gekennzeichnet wird. Typischerweise soll die Mittelung entsprechend der für Cell-Reselection bzw. Handover durchgeführten Mittelung erfolgen.

Die vorliegende Erfindung lässt sich sowohl zur Detektion permanenter Versorgungslücken, als auch temporärer Versorgungslücken anwenden. Es sind dabei folgende Anwendungsfälle möglich und realisierbar.

Fall 1: Geographische Gegende mit einem permanent zu geringen Signalpegel können in Netzplanungstools nur ungenügend erkannt werden. Die Qualität, mit der sie erkannt werden hängt von den zugrundeliegenden Planungsparametern ab. Der Nachteil der geringen Granularität von Planungstools (die typische Auflösung innerhalb welcher einheitliche Werte z.B. für Gebäudebeschaffenheit angenommen werden liegt bei 50 m x 50 m), wird durch den erfindungsgemäßen dynamischen Algorithmus, der aufgrund von reellen Daten aus dem Netz mit Auflösungen bis hin zur geographischen Auflösung der Positionierungsverfahren arbeiten kann, behoben.

Fall 2: Eine permanente Versorgungslücke bei einer Netztechnologie aufgrund zu geringer Signalqualität entsteht in der Regel durch fehlerhafte Radioplanung (Zellüberlappung / Interferenz / Einstellungen des Antennen-Neigewinkels). Hierbei herrscht in der betrachteten Zelle ein zu hohes Empfangssignal aus benachbarten Zellen, was zu störenden Interferenzen und damit zu einem zu geringen Ec/No führt, wie aus der Figur 2 ersichtlich. Planungstools zeigen aber die durch andere Zellen erzeugte Interferenz nicht korrekt an, da die Annahmen in den Ausbreitungsmodellen oftmals von den tatsächlichen Bedingungen abweichen, z.B. die Annahme einer zu starken Dämpfung entlang einer Straße, die aber tatsächlich zu hoher Empfangsleistung an weit entfernten Positionen außerhalb des eigentlichen Zellgebietes führen kann. Besonders ausgeprägt ist dieser Effekt in LTE- und UMTS-Netzen, die typischerweise mit einem Frequenzwiederholfaktor (frequency reuse) von 1 geplant werden.

Fall 3: Eine Versorgungslücke aufgrund eines temporären Pegeleinbruches ist ein typischer Anwendungsfall der vorliegenden Erfindung. In Mobilfunknetzen treten beispielsweise bei der Indoor-Versorgung temporäre Abschattungen des Nutzsignals durch Personen auf, die sich innerhalb einer Wohnung bewegen und damit Pegeleinbrüche von oft bis zu 10 dB verursachen. Liegt der Empfangspegel ohne temporäre Abschattung bereits nahe S1, so wird bei Unterschreiten des Schwellwertes durch die zusätzliche Abschattung gemäß der Bedingung [(Signalpegel < Schwellwert S1) ODER (Signalqualität < Schwellwert S2)] UND (Signallaufzeit < Schwellwert S3) eine Versorgungslücke detektiert. Dazu muss auch die dritte Bedingung (Signallaufzeit < Schwellwert S3) erfüllt sein. Es lassen sich aber durch diesen Algorithmus sowohl örtliche, als auch zeitliche Pegeleinbrüche detektieren.

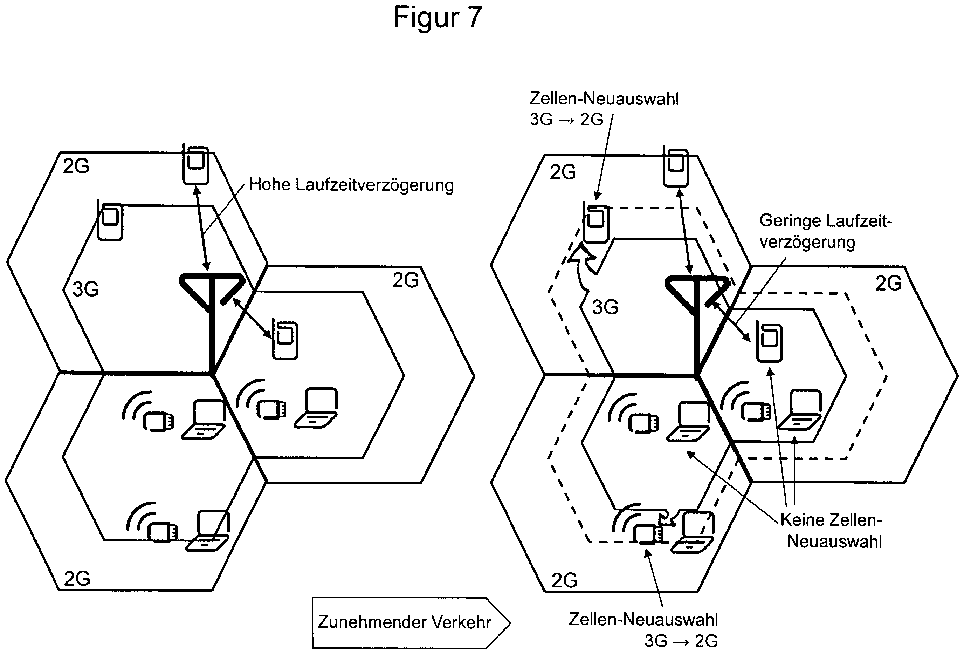

Fall 4: Versorgungslücken aufgrund temporärer Schwankungen der Signalqualität stellen ein deutliches Problem in 3G-Netzen dar und sind häufig auf den Cell Breathing Effekt zurückzuführen. Dieser Effekt ist in Figur 7 dargestellt und tritt sowohl in UL-, als auch in DL-Richtung auf. Intrazell-Interferenz spielt technologiebedingt in 3G-Netzen eine wesentlich größere Rolle als in 2G- oder LTE-Netzen denn in Code Division Multiple Access (CDMA) Netzen ist die Intrazell-Interferenz aufgrund der geringen Entfernung von UL-Interferern bedeutender als die Interzell-Interference.

Der Versorgungsbereich der Zelle wird durch die maximale Sendeleistung beschränkt. Diese muss aber ausreichend hoch sein, um gemäß Figur 2 ein bestimmtes Ec/No am Empfänger aufrecht zu erhalten. Mit steigender Verkehrslast im Netz steigt sowohl die Intrazell-, als auch die Interzell-Interferenz an. Je höher die Interferenz ist, desto weniger darf das Nutzsignal abgeschattet sein, um mit derselben Sendeleistung die Empfangsqualität aufrecht zu erhalten. Ein Anstieg der Interferenz führt dazu, dass in bestimmten Gebieten das Kriterium Ec/No > THR_i mit i = {2; 4; 5} gemäß Figur 2 nicht mehr erfüllt ist. Dies führt zu einer Reduzierung der Zellfläche, ein Effekt, der speziell in 3G-Mobilfunknetzen auftritt, dessen Existenz aber durch die Auswertung von herkömmlichen Performance-Countern nicht identifiziert werden kann und dessen verursachte Versorgungslücken gemäß des erfindungsgemäßen Algorithmus detektiert werden sollen.

In DL-Richtung kann Cell-Breathing durch eine variierende Anzahl an Teilnehmern und dem unterschiedlichen Gewinn durch das Despreading verursacht werden. Betrachtet sei ein Szenario ohne Common Channels und Nachbarschaftszellen. Befindet sich ein Teilnehmer in der betrachteten Zelle mit Spreading-Faktor 16 (SF = 16), so wird dieser Verbindung die gesamte DL-Sendeleistung zugeteilt. Das Empfangssignal kommt am mobilen Endgerät gedämpft an. Durch Despreading wird das Empfangssignal durch den Faktor 16 verstärkt. Es resultiert somit eine hohe Empfangsqualität.

Befinden sich dagegen 16 Teilnehmer in der Zelle am selben Ort, von denen jeder SF = 16 verwendet, so wird die DL-Sendeleistung auf alle Teilnehmer aufgeteilt und der Verbindung zu jedem Teilnehmer 1/16 der gesamten Sendeleistung zugeteilt. Trotz Despreading-Gewinn resultiert aufgrund der hohen Anzahl an Teilnehmern eine geringe Empfangsqualität. Die durch Cell Breathing entstehenden Versorgungslücken können weder durch die herkömmlichen Performance Counter für Leistung, noch durch die Counter für Interferenz (Received Total Wideband Power, RTWP) detektiert werden. Anstelle von Versorgungslücken werden hierbei bei Performance-Counter Auswertungen Indizien für eine Kapazitätserweiterung gegeben.

Der bedeutende Schritt der erfindungsgemäßen Lösung ist die kontinuierliche Auswertung von Performancedaten (Signalpegel und Signalqualität) und die Verknüpfung mit geographischen Informationen, um Versorgungslücken innerhalb des aufgrund der Planungsdaten versorgten Gebietes zu identifizieren.

Um in 3G-Netzen detailliertere Kenntnis über Empfangspegel und Empfangsqualität am Ort des mobilen Endgerätes zu erhalten, soll in einer weiteren Ausprägung dieser Erfindung das Mobilfunknetz in die Lage versetzt werden, das mobile Endgerät zu periodischen oder event-getriggerten Measurement Reports aufzufordern, was gemäß Stand der Technik in den heutigen 3G-Mobilfunksystemen nicht erfolgt. Damit wird das mobile Endgerät gezwungen, im CELL_DCH (dedicated channel) Status Informationen über die in DL-Richtung vorherrschenden Empfangsbedingungen an das Netz zu berichten. In UL-Richtung dagegen werden im aktiven Modus bereits Empfangspegel und Empfangsqualität ausgewertet. Das Senden dieser Measurement-Reports soll auf Zellen und/oder auf Teilnehmer beschränkt werden können. Eine teilnehmerbezogene Auswahl kann über die Auswertung der International Mobile Subscriber Identity (IMSI) realisiert werden um beispielsweise durch Teilnehmer berichtete Versorgungslücken nachzuweisen.

In einer weiteren bevorzugten Ausgestaltung der Erfindung kann der oben beschriebene Algorithmus für die sog. selbstorganisierenden Netze (Self Organizing Networks, SON) verwendet werden, um Versorgungslücken im Rahmen von SON zu identifizieren. Das Ziel von SON liegt darin, Probleme - speziell im Radio Access Bereich - zu erkennen, zu melden und in einem weiteren Schritt, auf Regeln basierend und in automatisierter Form, Gegenmaßnahmen zu ergreifen. Ein Beispiel ist die Detektion von DL- oder UL-Versorgungslücken mit einer automatisierten Änderung des Neigungswinkels der Antenne (Tilt).

Der erfindungsgemäße Algorithmus bietet die Lösung für die Identifizierung von Versorgungslücken. Dabei kann die Detektion von Versorgungslücken auf die unterschiedlichsten Kanäle für 2G-, 3G- und LTE-Netze angewandt werden. Durch individuelle Schwellwerte S1i, S2i und S3i lassen sich gemäß der Bedingung [(Signalpegel < Schwellwert S1i) ODER (Signalqualität < Schwellwert S2i)] UND (Signallaufzeit < Schwellwert S3i) unterschiedliche Kriterien für jeden Kanal i festlegen.

In einer weiteren Ausgestaltung der Erfindung kann der Algorithmus für die Optimierung von Software-Parametern verwendet werden, z.B. zur Optimierung von Zellen-Neuauswahl und Handover Parametern, sowie für Sendeleistungseinstellungen.

Des Weiteren kann der Algorithmus verwendet werden, um die Neigung der Antenne zu optimieren (z.B. automatisiert über Remote Electrical Tilting, RET) oder als neue Eingangsgröße für den in 3GPP beschriebenen Inter-Cell Interference Coordination (ICIC) Algorithmus. Im letzeren Fall sollen die Informationen über detektierte Versorgungslücken mittels des hier beschriebenen Algorithmus verwendet werden, um die Interferenz an diesen Stellen durch ICIC-Maßnahmen zu reduzieren und temporäre Versorgungslücken zu vermeiden.

Es ist aber auch durchaus möglich, den hier für das 3G-Netz beschriebenen Algorithmus auf 2G-Netze und LTE-Netze anzuwenden. In 2G-Netzen soll der Receive-Level (RxLEV), der von der Basisstation in UL-Richtung für eine aktive Verbindung permanent bestimmt wird und für den DL über Measurement-Reports an das Netz übermittelt wird, analysiert werden. Die Signalqualität soll über die Auswertung der Bitfehlerrate (Bit Error Rate, BER), Block-Fehlerrate (Block Error Rate, BLER) für paketvermittelte Dienste (packet-switched services) und der Frame-Fehlerrate für kanalgebundene Dienste (circuit-switched services) bestimmt werden. Alternative Möglichkeiten sind die Auswertung des C/I, das über die BER geschätzt werden kann oder über den 3GPP Parameter RxQUAL (Receive-Quality), der ein Mapping der Bitfehlerrate auf acht RxQUAL-Stufen beinhaltet. Zusätzliche Alternativen sind die aus der Qualitätsinformation abgeleiteten Größen, wie das verwendete Modulations- und Kodierschema (Modulation and Coding Scheme, MCS) für paketorientierte Dienste bzw. Codec Modes für kanalgebundene Dienste. Für die Laufzeitberechnung des Signals soll die Timing-Advance Information verwendet werden.

Für LTE sollen die Parameter Reference Signal Received Power (RSRP) bzw. Received Signal Strength Indicator (RSSI) zur Bestimmung der Signalstärke verwendet werden. Die Signalqualität soll anhand der Parameter SINR, Channel Quality Indicator (CQI) bzw. Reference Signal Received Quality (RSRQ) oder anhand der MCS-Verwendung analysiert werden.

Generell können hiermit Versorgungslücken innerhalb einer Netztechnologie detektiert werden, indem die einem Zellwechsel vorangegangenen Informationen ausgewertet werden. Versorgungslücken in einem Gebiet, das durch keine weitere Netztechnologie versorgt wird, können ebenso detektiert werden. In diesem Falle kommt es anstelle des rettenden Zellwechsels zu einem Abbruch der Verbindung.

Beispiele hierfür sind die Detektion von LTE2600 MHz Versorgungslücken, dessen Verkehr über die darunter liegende LTE800 MHz Technologie oder 3G bzw. 2G Technologie übernommen wird. Auch der umgekehrte Fall ist möglich, d.h. eine Versorgungslücke im LTE800 MHz Netz aufgrund von Abschattung und eine Übernahme des Verkehrs durch LTE2600 MHz.

Die obigen Ausführungen beziehen sich auf den 3G-Fall. Das erfindungsgemäße Gerät und das erfindungsgemäße Verfahren können aber in angepasster Form auch für 2G und LTE sowie für weitere Mobilfunkstandards verwendet werden.

## Patentansprüche

1. Gerät zur Detektion von permanenten und/oder temporären Versorgungslücken in einem Netzwerk, insbesondere in einem Mobilfunknetz, wobei das Gerät geeignet ist, Echtzeit-Daten aus dem Netz zu erfassen und auszuwerten, um eine Versorgungslücke zu erkennen, wobei das Gerät eine Hardware-Einheit (12) aufweist, welche folgendes enthält:
- eine Eingabe-/Ausgabe-Einheit (14) zur Aufnahme und Ausgabe der erfassten Echtzeit-Daten;
- einen Prozessor (16) zur Verarbeitung der Echtzeit-Daten; und
- eine Speicher-Einheit (18) zur Speicherung und Wiederabrufen der Daten,
und wobei als Echtzeit-Daten Signalpegel und Signalqualität mittels der Eingabe-/Ausgabe-Einheit (14) erfassbar und dem Prozessor (16) zur Verarbeitung hinzufügbar sind und in der Speicher-Einheit (18) Schwellwerte von Signalpegel, Signalqualitätund Signallaufzeit, welche eine Versorgungslücke kennzeichnen, enthalten sind, wobei die Schwellwerte dem Prozessor (16) für die Auswertung der erfassten Echtzeit-Daten hinzufügbar sind und für die Auswertung der hinzugefügten Daten im Prozessor (16) die Signallaufzeit verwendbar ist, um Versorgungslücken im inneren Bereich eines von der Zelle abgedeckten Versorgungsgebietes von an einem Zellrand entstandenen Versorgungslücken zu unterscheiden.

2. Gerät nach Anspruch 1, **dadurch gekennzeichnet, dass** das Gerät geeignet ist, Echtzeit-Daten anderer im Netz befindlicher mobiler Endgeräte einzulesen, wobei vorzugsweise vorgesehen ist, dass das Gerät geeignet ist, diese Daten über eine Ein/Ausgabe- einzulesen, in einem Prozessor zu verarbeiten und über einen Vergleich mit den in einer Speichereinheit enthaltenen Schwellwerten Versorgungslücken zu detektieren.

3. Gerät nach Anspruch 1 oder 2, **dadurch gekennzeichnet, dass** die Versorgungslücke anhand einer Verknüpfung von Messparametern und Schwellwerten detektierbar ist.

4. Gerät nach einem der vorhergehenden Ansprüche, **dadurch gekennzeichnet, dass** für die Auswertung der hinzugefügten Daten im Prozessor (16) weitere Daten, wie Zeitsteuerungsvorlauf und/oder geographische Informationen verwendbar sind, um Versorgungslücken im inneren Bereich eines von der Zelle abgedeckten Versorgungsgebietes von an einem Zellrand entstandenen Versorgungslücken zu unterscheiden.

5. Mobiles multi-technologiefähiges Endgerät, welches geeignet ist, im Connected Mode, insbesondere für die 3G-Technologie im CELL_DCH Status, periodische oder ereignisgesteuerte Messprotokolle an ein Mobilfunknetz zu schicken und dieses über einen aktuellen Empfangspegel und eine aktuelle Empfangsqualität eines von einer Sende-/Empfänger-Einheit des mobilen Endgerätes empfangenen Echtzeit-Signals zu informieren, um Informationen über Empfangsbedingungen am Aufenthaltsort des mobilen Endgerätes im Verbindungsmodus bereitzustellen, wobei das Endgerät das Gerät nach einem der Ansprüche 1 bis 4 aufweist.

6. Verfahren zur Detektion von permanenten und/oder temporären Versorgungslücken in einem Netzwerk, insbesondere in einem Mobilfunknetz, mit folgenden Verfahrensschritten:
- Empfangen eines Signals mittels einer Sende-/Empfänger-Einheit (14) eines Gerätes (10);
- Auswertung des Signalpegels (z.B. RSCP), der Signalqualität (z.B. Ec/No) sowie der Signallaufzeit des Signals in einem im Gerät (10) vorgesehenen Prozessor (16); und
- Übermittlung der ausgewerteten Signaldaten an das Mobilfunknetz,
wobei die Signaldaten kontinuierlich ausgewertet werden und bei Unterschreiten eines eingestellten Schwellwertes für den Signalpegel oder bei Unterschreiten eines eingestellten Schwellwertes für die Signalqualität und Unterschreiten eines eingestellten Schwellwertes für die Signallaufzeit innerhalb eines Beobachtungszeitraums eine Versorgungslücke detektiert wird.

7. Verfahren nach Anspruch 6, **dadurch gekennzeichnet, dass** die Wahl der eingestellten Schwellwerte zum Erkennen von Versorgungslücken, in denen ein Campieren des Endgerätes oder auch ein Betreiben des Endgerätes im aktiven Modus als nicht geeignet definiert wird, dient.

8. Verfahren nach Anspruch 7, **dadurch gekennzeichnet, dass** die Wahl der eingestellten Schwellwerte zum Erkennen von Versorgungsbereichen, in denen nach besser geeigneten Nachbarzellen bzw. Zellen anderer Netztechnologien gesucht wird, dient.

9. Verfahren nach einem der Ansprüche 6 bis 8, **dadurch gekennzeichnet, dass** das Gerät (10) Teil eines mobilen Endgerätes ist, wobei das mobile Endgerät 2G- und/oder 3G-fähig ist, und/oder in LTE und/oder weiteren Mobilfunkstandards betreibbar ist, und wobei das Gerät aufgrund einer detektierten Versorgungslücke ein Wechsel aus einem Netz einer ersten Netztechnologie in das Netz einer zweiten Netztechnologie durchführt, wobei das Gerät (10) geeignet ist, im Netz der zweiten Netztechnologie auch Messungen des Signalpegels und der Signalqualität des Netzes der ersten Netztechnologie durchzuführen.

10. Verfahren nach Anspruch 9, **dadurch gekennzeichnet, dass** nach Verlassen der Versorgungslücke des Netzes einer bestimmten Netztechnologie und nach Erfüllung von Einbuchkriterien für das Netz dieser Netztechnologie, ein Wechsel zurück in das Netz dieser Netztechnologie angestoßen wird, wobei dieses Rückfall-Ereignis für eine Unterscheidung zwischen permanenten und temporären Versorgungslücken ausgewertet wird.

11. Verfahren nach einem der Ansprüche 6 bis 10, **dadurch gekennzeichnet, dass** periodisch oder ereignisgesteuert die Signalqualität und/oder der Signalpegel jedes mobilen Endgerätes, welches sich in der Reichweite einer Basisstation befindet, im Verbindungsmodus an das Netz übermittelt werden mit dem Ziel der Detektion von Versorgungslücken.

## Claims

1. A device for detecting permanent and/or temporary coverage gaps in a network, in particular in a mobile radio network, wherein the device is suited to detect and evaluate real-time data from the network in order to detect a coverage gap, wherein the device includes a hardware unit (12) which contains the following:
- an input/output unit (14) for receiving and outputting the detected real-time data;
- a processor (16) for processing the real-time data; and
- a memory unit (18) for storing and retrieving the data,
and wherein as real-time data signal level and signal quality can be detected by means of the input/output unit (14) and be added to the processor (16) for processing, and in the memory unit (18) threshold values of signal level, signal quality and signal runtime, which characterize a coverage gap, are contained, wherein the threshold values can be added to the processor (16) for the evaluation of the detected real-time data, and for the evaluation of the added data in the processor (16) the signal runtime can be used in order to distinguish coverage gaps in the inner region of a coverage area covered by the cell from coverage gaps obtained at a cell edge.

2. The device according to claim 1, **characterized in that** the device is suited to import real-time data of other mobile terminals present in the network, wherein it preferably is provided that the device is suited to import these data via an input/output unit (14), to process the same in a processor and to detect coverage gaps by a comparison with the threshold values contained in the memory unit.

3. The device according to claim 1 or 2, **characterized in that** the coverage gap can be detected with reference to a combination of measurement parameters and threshold values.

4. The device according to any of the preceding claims, **characterized in that** for the evaluation of the added data in the processor (16) further data, such as timing advance and/or geographical information, can be used in order to distinguish coverage gaps in the inner region of a coverage area covered by the cell from coverage gaps obtained at a cell edge.

5. A mobile, multi-technology terminal, which in the connected mode, in particular in the CELL_DCH status for the 3G technology, is suited to send periodic or event-controlled measurement protocols to a mobile radio network and to inform the same about a current reception level and a current reception quality of a real-time signal received by a transceiver unit of the mobile terminal in order to provide information about reception conditions at the location of the mobile terminal in the connected mode, wherein the terminal includes the device according to any of claims 1 to 4.

6. A method for detecting permanent and/or temporary coverage gaps in a network, in particular in a mobile radio network, comprising the following method steps:
- receiving a signal by means of a transceiver unit (14) of a device (10);
- evaluating the signal level (e.g. RSCP), the signal quality (e.g. Ec/No) and the signal runtime of the signal in a processor provided in the device (10); and
- transmitting the evaluated signal data to the mobile radio network,
wherein the signal data are evaluated continuously and on shortfall of a set threshold value for the signal level or on shortfall of a set threshold value for the signal quality and on shortfall of a set threshold value for the signal runtime within an observation period a coverage gap is detected.

7. The method according to claim 6, **characterized in that** the choice of the set threshold values serves to detect coverage gaps in which camping of the terminal or also operating the terminal in the active mode is defined as not suitable.

8. The method according to claim 7, **characterized in that** the choice of the set threshold values serves to detect coverage areas in which a search for more suitable neighboring cells or cells of other network technologies is carried out.

9. The method according to any of claims 6 to 8, **characterized in that** the device (10) is part of a mobile terminal, wherein the mobile terminal is suitable for 2G and/or 3G technology, and/or is operable by LTE and/or further mobile radio standards, and wherein due to a detected coverage gap the device performs a switch from a network of a first network technology into the network of a second network technology, wherein the device (10) is suited to also carry out measurements of the signal level and the signal quality of the network of the first network technology in the network of the second network technology.

10. The method according to claim 9, **characterized in that** after leaving the coverage gap of the network of a particular network technology and after fulfilling log-in criteria for the network of this network technology, a switch back into the network of this network technology is initiated, wherein this fall-back event is evaluated for a distinction between permanent and temporary coverage gaps.

11. The method according to any of claims 6 to 10, **characterized in that** in the connected mode the signal quality and/or the signal level of each mobile terminal within reach of a base station are transmitted to the network periodically or on an event-controlled basis with the aim to detect coverage gaps.

## Revendications

1. Appareil de détection de manques de couverture permanents et/ou temporaires dans un réseau, en particulier dans un réseau radio mobile, dans lequel l'appareil est apte à détecter et évaluer des données en temps réel provenant du réseau, afin de détecter un manque de couverture, dans lequel l'appareil comprend une unité de hardware (12), comprenant :
- une unité d'entrée/sortie (14) pour recevoir et sortir des données en temps réel recueillies ;
- un processeur (16) pour le traitement des données en temps réel ; et
- une unité de mémoire (18) destinée à stocker et récupérer les données,
et dans lequel le niveau de signal et la qualité de signal peuvent être détectés comme données en temps réel au moyen de l'unité d'entrée/sortie (14) et peuvent être ajoutés au processeur (16) pour le traitement, et dans l'unité de mémoire (18) des valeurs seuil du niveau de signal, de la qualité de signal et du temps de parcours de signal, qui caractérisent un manque de couverture, sont contenus, dans lequel les valeurs seuil peuvent être ajoutées au processeur (16) pour l'évaluation des données en temps réel ajoutées, et pour l'évaluation des données ajoutées dans le processeur (16) le temps de parcours de signal peut être utilisé pour distinguer des manques de couverture dans la région intérieure d'une zone de couverture couverte par la cellule des manques de couverture obtenus sur un bord de cellule.

2. Appareil selon la revendication 1, **caractérisé en ce que** l'appareil est apte à importer des données en temps réel d'autres terminaux mobiles présents dans le réseau, dans lequel il est prévu de préférence que l'appareil est apte à importer ces données par une unité d'entrée/sortie (14), de les traiter dans un processeur et de détecter des manques de couverture par une comparaison avec les valeurs seuil contenues dans une unité de mémoire.

3. Appareil selon les revendications 1 ou 2, **caractérisé en ce que** le manque de couverture peut être détecté à l'aide d'une combinaison de paramètres de mesure et de valeurs seuil.

4. Appareil selon l'une quelconque des revendications précédentes, **caractérisé en ce que** pour l'évaluation des données ajoutées dans le processeur (16) des données supplémentaires, comme une avance temporelle et/ou des informations géographiques, peuvent être utilisées pour distinguer des manques de couverture dans la région intérieure d'une zone de couverture couverte par la cellule de manques de couverture obtenus sur un bord de cellule.

5. Terminal mobile multi-technologie, qui en mode connecté, en particulier pour la technologie 3G dans l'état CELL_DCH, est apte à envoyer des protocoles de mesure périodiques ou commandés par des événements à un réseau radio mobile et à informer celui-ci sur un niveau de réception actuel et une qualité de réception actuelle d'un signal en temps réel reçu d'une unité émettrice/réceptrice du terminal mobile, pour fournir des informations sur les conditions de réception à l'endroit du terminal mobile en mode de connexion, dans lequel le terminal comprend l'appareil selon l'une quelconque des revendications 1 à 4.

6. Procédé de détection de manques de couverture permanents et/ou temporaires dans un réseau, en particulier dans un réseau radio mobile, comportant les étapes de procédé suivantes :
- recevoir un signal au moyen d'une unité émettrice/réceptrice (14) d'un appareil (10) ;
- évaluation du niveau de signal (p. ex. RSCP), de la qualité de signal (p. Ex. Ec/No) et le temps de parcours du signal dans un processeur (16) prévu dans l'appareil (10) ; et
- transmission des données de signal évaluées au réseau radio mobile,
dans lequel les données de signal sont évaluées continuellement et en cas de descente au-dessous d'une valeur seuil réglée pour le niveau de signal ou en case de descente au-dessous d'une valeur seuil réglée pour la qualité de signal et descente au-dessous d'une valeur seuil réglée pour le temps de parcours de signal dans une période d'observation un manque de couverture est détecté.

7. Procédé selon la revendication 6, **caractérisé en ce que** le choix des valeurs seuil réglées sert à détecter des manques de couverture, dans lesquels un campement du terminal ou aussi un fonctionnement du terminal en mode actif est défini comme non approprié.

8. Procédé selon la revendication 7, **caractérisé en ce que** le choix des valeurs réglées sert à détecter des zones de couverture, dans lesquelles des cellules voisines plus appropriées ou des cellules d'autres technologies de réseau sont cherchées.

9. Procédé selon l'une quelconque des revendications 6 à 8, **caractérisé en ce que** l'appareil (10) fait partie d'un terminal mobile, dans lequel le terminal mobile est apte à 2G et/ou 3G, et/ou peut fonctionner en LTE et/ou autres normes de radiocommunication mobile, et dans lequel à cause d'un manque de couverture détecté l'appareil effectue un changement d'un réseau d'une première technologie de réseau dans le réseau d'une deuxième technologie de réseau, dans lequel l'appareil (10) est apte à effectuer aussi des mesures du niveau de signal et de la qualité de signal du réseau de la première technologie de réseau dans le réseau de la deuxième technologie de réseau.

10. Procédé selon la revendication 9, **caractérisé en ce qu'**après avoir quitté le manque de couverture du réseau d'une technologie de réseau particulière et après avoir rempli des critères de log-in pour le réseau de cette technologie de réseau, un changement retour au réseau de cette technologie de réseau est initié, dans lequel cet événement de rechute est évalué pour une distinction entre des manques de couverture permanents et temporaires.

11. Procédé selon l'une quelconque des revendications 6 à 10, **caractérisé en ce que** périodiquement ou suivant une commande par événements la qualité de signal et/ou le niveau de signal de chaque terminal mobile, qui se trouve à portée d'une station de base, sont transmis au réseau en mode de connexion avec l'objectif de la détection de manques de couverture.
